(19) **Europäisches Patentamt**
**European Patent Office**
**Office européen des brevets**

(11) **EP 2 362 188 A2**

(12) **EUROPEAN PATENT APPLICATION**

(43) Date of publication:
**31.08.2011 Bulletin 2011/35**

(51) Int Cl.:
**G01D 4/00** *(2006.01)* **G01D 7/04** *(2006.01)*
**G01D 3/10** *(2006.01)*

(21) Application number: **11153154.7**

(22) Date of filing: **03.02.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.02.2010 JP 2010022963**

(71) Applicant: **Panasonic Corporation**
**Kadoma-shi**
**Osaka 571-8501 (JP)**

(72) Inventors:
• **Nasu, Ichiro**
**Osaka 540-6207 (JP)**
• **Miyauchi, Shinji**
**Osaka 540-6207 (JP)**

(74) Representative: **Schwabe - Sandmair - Marx**
**Patentanwälte**
**Stuntzstraße 16**
**81677 München (DE)**

(54) **Display device and water heater including the same**

(57)     A display device of the present invention includes a timer unit (1), a measuring unit (2), a storing unit (3), a display unit (4), and a controller (5). A second graph (23) is displayed on the display unit (4) so as to be in parallel with a time coordinate axis (19) of a first graph (18). The controller (5) displays as the first graph (18) a first accumulated value that is an energy used amount in each of first periods. The controller (5) displays an accumulated value of the energy used amount as a bar graph value of the second graph (23). The controller (5) displays a current target value at a position of the second graph (23), the position corresponding to a present time point of the time coordinate axis (19) of the first graph (18), the current target value being a target value of the accumulated value of the energy used amount used from a start time point of the second period until the present time point.

Fig.1

## Description

### [Field of Invention]

The present invention relates to a display device configured to display as a graph an energy (electricity, gas) used amount or a hot water used amount which is an alternative indicator of the energy used amount, and a water heater including the display device, and particularly to the configuration of the display device.

### [Background Art]

Known is an energy control system configured to raise user's awareness about energy saving by using information of, for example, the energy (electricity, gas) used mount (see PTL1, for example). Also known is an information terminal configured for the purpose of increasing appeal power with respect to the energy used amount (see PTL2, for example).

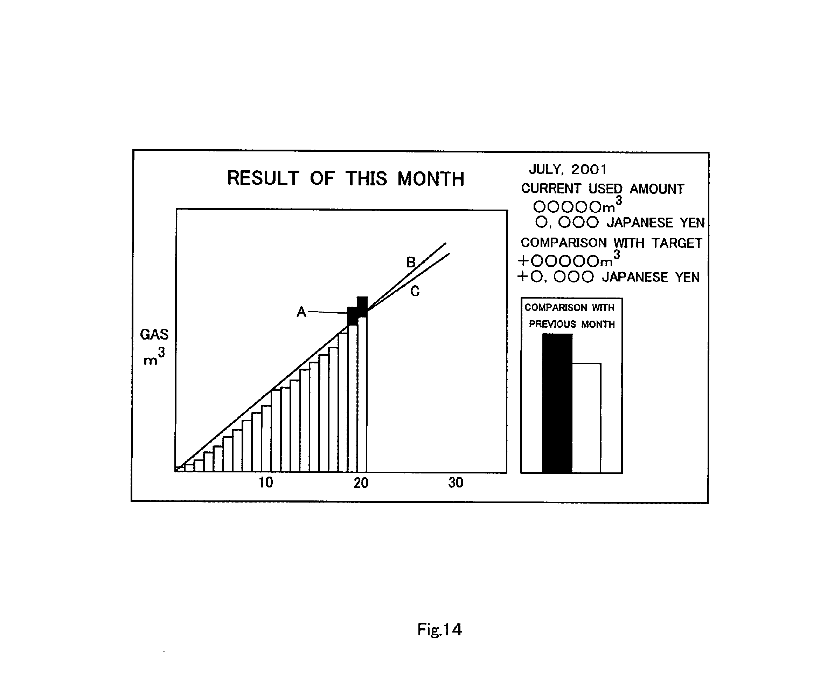

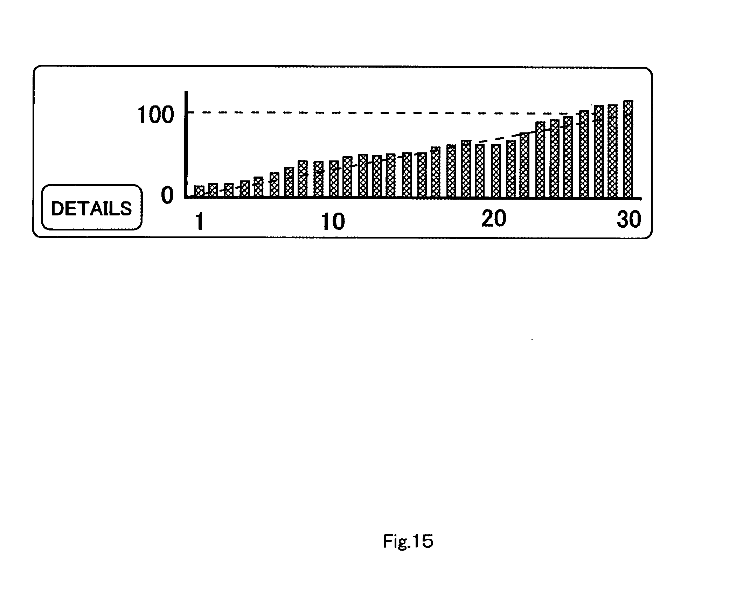

Here, Fig. 14 shows one example of a screen image displayed on a display of a display portion of the energy control system disclosed in PTL1, and Fig. 15 is a diagram showing one example of a display of a display portion of the information terminal disclosed in PTL2.

As shown in Fig. 14, in the energy control system disclosed in PTL1, an actual accumulated energy used amount is shown on one screen by a bar graph. Then, a portion which exceeds an energy saving target value is displayed by a bar graph of a different color, such as a black portion A.

As shown in Fig. 15, in the information terminal disclosed in PTL2, an energy consumption amount per unit time is displayed on one screen by a bar graph, and a target reference value when the above unit time has passed is displayed. The target reference value is calculated by proportional distribution from a target reference value with respect to an entire predetermined period.

### [Citation List]

### [Patent Literature]

PTL1: Japanese Laid-Open Patent Application Publication No. 2003-50626
PTL2: Japanese Laid-Open Patent Application Publication No. 2006-13780

### [Summary of the Invention]

### [Technical Problem]

However, in each of the energy control system disclosed in PTL1 and the information terminal disclosed in PTL2, the information displayed on one screen are only an actual accumulated value in a certain unit period (monthly basis in Figs. 14 and 15) and a target value in the certain unit period. Therefore, information amount is inadequate to raise user's awareness about energy saving. In order that the user can obtain information necessary for living an energy saving lifestyle, the user needs to switch the screen to obtain information regarding a unit period which is shorter than or longer than the originally displayed unit period. Therefore, each of the energy control system disclosed in PTL1 and the information terminal disclosed in PTL2 is inadequate to raise user's awareness about energy saving, and there is room for improvement regarding convenience.

The present invention was made to solve the above problems, and an object of the present invention is to provide a display device which raises user's awareness about energy saving and excels in convenience, and a water heater including such display device.

### [Solution to Problem]

In order to solve the above problems, a display device according to the present invention is a display device configured to display an energy used amount as a graph and includes: a timer unit including a clock and a calendar function and configured to measure each of first periods and a second period that is longer than the first period; a measuring unit configured to measure the energy used amount used by a user; a storing unit configured to store the energy used amount measured by the measuring unit; a display unit including a first graph region and a second graph region arranged in parallel with the first graph region; and a controller, wherein: a first graph is displayed in the first graph region of the display unit, the first graph being shown by a time coordinate axis whose maximum scale value is the second period and a data coordinate axis having a scale indicating the energy used amount; a second graph is displayed as a bar graph in the second graph region of the display unit so as to be in parallel with the time coordinate axis of the first graph; the controller calculates first accumulated values, each of which is the energy used amount in each of the first periods; the controller displays the first accumulated values as the first graph for each of the first periods from a start time point of the second period until a present time point defined by the timer unit; the controller displays as a bar graph value of the second graph an accumulated value of the energy used amount used from the start time point of the second period until the present time point defined by the timer unit; and the controller displays a current target value at a position of the second graph, the position corresponding to the present time point of the time coordinate axis of the first graph, the current target value being a target value of the accumulated value of the energy used amount used from the start time point of the second period until the present time point defined by the timer unit.

With this, the energy used amount per unit time and the accumulated value of the energy used amount are displayed on one screen, and the display of the current target value of the second graph is associated with the time coordinate axis of the graph displayed by the first graph. Therefore, the user can obtain more information than the prior arts by one screen, and it is easy for the user to understand the meaning of the obtained information.

The above object, other objects, features and advantages of the present invention will be made clear by the following detailed explanation of preferred embodiments with reference to the attached drawings.

[Advantageous Effects of Invention]

In accordance with the display device of the present invention and the water heater including the same, the user can obtain more information than prior arts by one screen, and it is easy for the user to understand the meaning of the obtained information. Therefore, the display device according to the present invention and the water heater including the same can raise user's awareness about energy saving more than the prior arts. In addition, since an operation of switching the screen can be simplified as compared to the prior arts, the display device according to the present invention and the water heater including the same excel in convenience.

[Brief Description of the Drawings]

[Fig. 1] Fig. 1 is a block diagram showing a schematic configuration of each of a display device according to Embodiment 1 of the present invention and a water heater including the same.
[Fig. 2] Fig. 2 is a schematic diagram showing the configuration of an appearance of the display device shown in Fig. 1.
[Fig. 3] Fig. 3 is a schematic diagram showing one example of a screen image displayed by a display unit of the display device shown in Fig. 2.
[Fig. 4] Fig. 4 is a schematic diagram showing one example of the screen image displayed by the display unit of the display device shown in Fig. 2.
[Fig. 5] Fig. 5 is a schematic diagram showing one example of the screen image displayed by the display unit of the display device shown in Fig. 2.
[Fig. 6] Fig. 6 is a schematic diagram showing one example of the screen image displayed by the display unit of the display device shown in Fig. 2.
[Fig. 7] Fig. 7 is a schematic diagram showing one example of the screen image displayed by the display unit of the display device shown in Fig. 2.
[Fig. 8] Fig. 8 is a schematic diagram showing one example of the screen image displayed by the display unit of the display device shown in Fig. 2.
[Fig. 9] Fig. 9 is a schematic diagram showing one example of the screen image displayed by the display unit of the display device according to Embodiment 2 of the present invention.
[Fig. 10] Fig. 10 is a schematic diagram showing one example of the screen image displayed by the display unit of the display device according to Embodiment 2 of the present invention.
[Fig. 11] Fig. 11 is a schematic diagram showing one example of the screen image displayed by the display unit of the display device of Modification Example 1.
[Fig. 12] Fig. 12 is a schematic diagram showing one example of the screen image displayed by the display unit of the display device according to Embodiment 3 of the present invention.
[Fig. 13] Fig. 13 is a schematic diagram showing one example of the screen image displayed by the display unit of the display device according to Embodiment 3 of the present invention.
[Fig. 14] Fig. 14 shows one example of the screen image displayed on the display of the display portion of the energy control system disclosed in PTL1.
[Fig. 15] Fig. 15 is a diagram showing one example of the display of the display portion of the information terminal disclosed in PTL2.

[Description of Embodiments]

Hereinafter, preferred embodiments of the present invention will be explained in reference to the drawings. In the drawings, the same reference signs are used for the same or corresponding components, and a repetition of the same explanation is avoided. Moreover, in the drawings, only the components necessary for explaining the present invention are shown, and the other components are omitted. Further, the present invention is not limited to the following embodiments.

Embodiment 1

A display device according to Embodiment 1 of the present invention is a display device configured to display an energy used amount as a graph and includes: a timer unit including a clock and a calendar function and configured to measure each of first periods and a second period that is longer than the first period; a measuring unit configured to measure the energy used amount used by a user; a storing unit configured to store the energy used amount measured by the measuring unit; a display unit including a first graph region and a second graph region arranged in parallel with the first graph region; and a controller, wherein: a first graph is displayed in the first graph region of the display unit, the first graph being shown by a time coordinate axis whose maximum scale value is the second period and a data coordinate axis having a scale indicating the energy used amount; a second graph is displayed as a bar graph in the second graph region of the display unit so as to be in parallel with the time coordinate axis of the first graph; the controller calculates first accumulated values, each of which is the energy used amount in each of the first periods; the controller displays the first accumulated values as the first graph for each of the first periods from a start time point of the second period until a present time point defined by the timer unit; the controller displays as a bar graph value of the second graph an accumulated value of the energy used amount used from the start time point of the second period until the present time point defined by the timer unit; and the controller displays a current target value at a position of the second graph, the position corresponding to the present time point of the time coordinate axis of the first graph, the current target value being a target value of the accumulated value of the energy used amount used from the start time point of the second period until the present time point defined by the timer unit.

Here, the bar graph denotes a band-shaped graph which is displayed to extend or shorten.

Moreover, "the present time point defined by the timer unit" denotes a current time (time point) measured by the timer unit in a case where the timer unit has started measurement from the start time point of the second period and the current time has not yet reached an end time point of the second period, and "the present time point defined by the timer unit" denotes the end time point of the second period in a case where the current time has passed the end time point of the second period.

Further, one example of a combination of "a first period and a second period that is longer than the first period" is a combination of "an hour and a day". The other examples are a combination of "a day and a week" and a combination of "a day and a month". To be specific, the first period and the second period can be set arbitrarily as long as the second period is an integer multiple of the first period, the multiple being not one.

**Configuration of Water Heater**

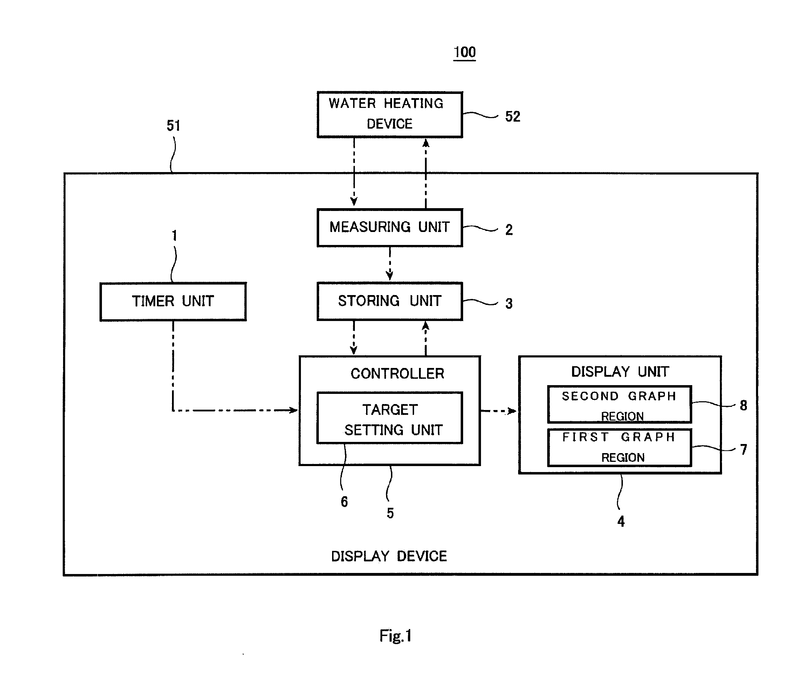

Fig. 1 is a block diagram showing a schematic configuration of each of the display device according to Embodiment 1 of the present invention and the water heater including the same.

As shown in Fig. 1, a water heater 100 according to Embodiment 1 of the present invention includes a display device 51 and a water heating device 52. The display device 51 includes a timer unit 1, a measuring unit 2, a storing unit 3, a display unit 4, and a controller 5. In Embodiment 1, the water heating device 52 is constituted by an electric water heating device configured to heat water by using electricity to supply hot water. The water heating device 52 may be constituted by a gas water heating device configured to heat water by combusting a combustible gas, such as a natural gas, to supply hot water or may be constituted by a hot water tank configured to absorb heat from a cogeneration device, such as a fuel cell or a gas power generator, to store hot water.

The timer unit 1 includes a clock and a calendar function and is configured to output a measured time to the controller 5. The time in the present invention includes both year/month/day information and time (o'clock/minute) information.

The measuring unit 2 is configured to measure an electricity used amount in the water heating device 52 and a hot water used amount in the water heating device 52 to output those amounts to the controller 5. For example, one example of the measuring unit 2 is an ammeter configured to measure the electricity used amount in the water heating device 52. Another example of the measuring unit 2 is a temperature sensor or flow meter configured to measure the hot water used amount in the water heating device 52.

The controller 5 may be any controller as long as it can control respective units constituting the display device 51. For example, the controller 5 may be constituted by a calculation processing unit, such as a microprocessor or a CPU. The storing unit 3 may be any unit as long as it is configured to store various data. Examples of the storing unit 3 are memories, such as nonvolatile memories and volatile memories.

A target setting unit 6 is realized by executing predetermined software by the controller 5, the predetermined software being stored in the storing unit 3. In Embodiment 1, the target setting unit 6 is configured to set a set target value that is a target energy used amount in the second period. Specifically, for example, an average value of the energy used amount at a standard home in one month (which is one example of the second period) may be prestored in the storing unit 3 at the factory, and the target setting unit 6 may set as the set target value the average value stored in the storing unit 3.

Moreover, the target setting unit 6 may set the set target value based on the energy used amount accumulated by using the water heater 100 by the user. For example, the target setting unit 6 may set as the set target value the energy used amount in the same month of the previous year or may set as the set target value the average value of the energy used amount used in a year.

The controller 5 stores in the storing unit 3 the time information measured by the timer unit 1 and the energy used amount used in the water heating device 52, the energy used amount being measured by the measuring unit 2. Specifically, the controller 5 stores in the storing unit 3 the energy used amount measured by the measuring unit 2. In addition, the controller 5 calculates first accumulated values, each of which is the energy used amount in each of the first periods, and stores the first accumulated values in the storing unit 3. In the middle of the first period, the storing unit 3 stores the energy used amount used from a start time point of the first period until the present time point. Moreover, the controller 5 may store in the storing unit 3 data of the first accumulated values in a certain period (for example, 13 months) and may remove the previous data from the storing unit 3 for each certain period (for example, for each second period).

The controller 5 may be constituted by a single controller or may be constituted by a group of a plurality of controllers which cooperate to execute control operations of the water heater 100. Moreover, the controller 5 may be constituted by a microcontroller or may be constituted by an MPU, a PLC (Programmable Logic Controller), a logic circuit, or the like.

The display unit 4 includes a first graph region 7 and a second graph region 8 arranged in parallel with the first graph region 7. The display unit 4 may be any unit as long as it can display images. For example, an LCD or LEDs may be used as the display unit 4.

**Configuration of Display Device**

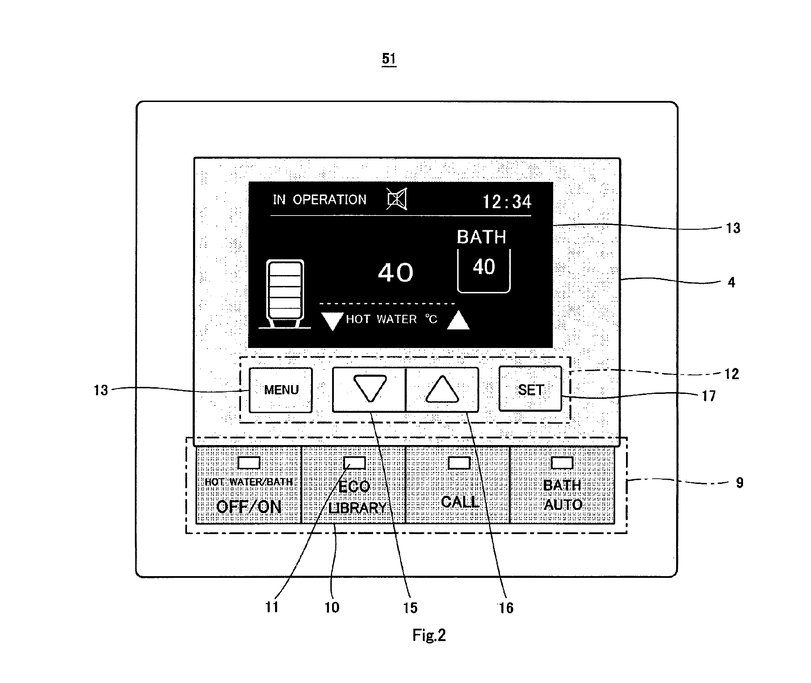

Next, the configuration of the display device 51 according to Embodiment 1 will be explained in detail in reference to Fig. 2.

Fig. 2 is a schematic diagram showing the configuration of an appearance of the display device shown in Fig. 1.

As shown in Fig. 2, the display device 51 according to Embodiment 1 is provided with a display unit (display screen) 4 and a direct switch group 9. The direct switch group 9 includes respective switches configured to operate the water heating device 52. A below-described eco library setting is performed by pressing an eco library switch 10. The eco library setting is a setting by which the first graph and the second graph are respectively displayed in the first graph region 7 and the second graph region 8. Moreover, the display device 51 is configured such that a display light 11 lights up when the eco library setting is on.

The display unit 4 displays a touch panel group 12 and a display screen 13. The touch panel group 12 is operated by directly touching the screen, and the display screen 13 displays an operation status and the like. The touch panel group 12 includes a menu key 14, a down arrow key 15, an up arrow key 16, and a set key 17. The eco library setting is performed by operating respective keys. By performing the eco library setting, the first graph and the second graph are displayed on the display screen 13.

**Configuration of Display Unit**

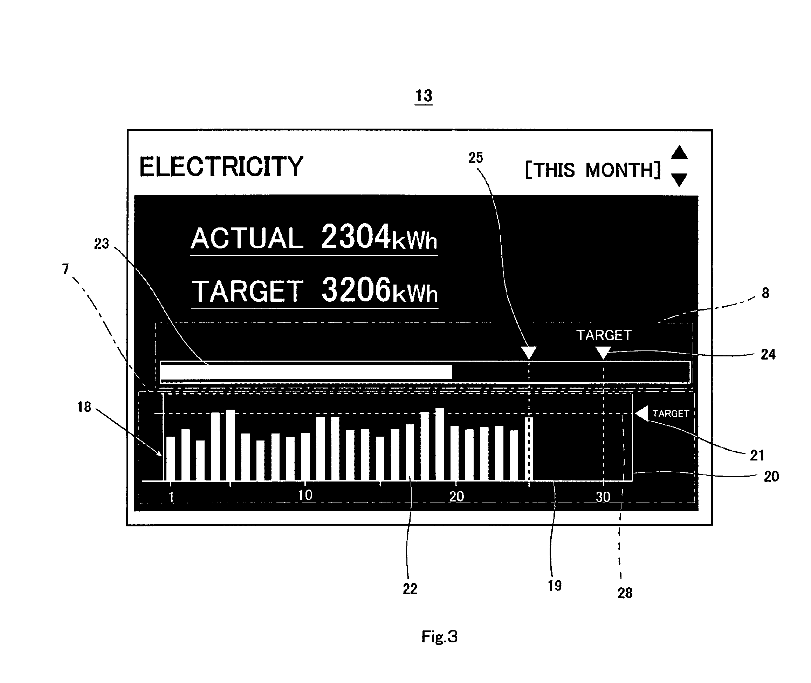

Next, the configuration of the display unit 4 of the display device 51 according to Embodiment 1, especially, the configurations of the first graph region 7 and second graph region 8 will be explained in detail in reference to Fig. 3.

Fig. 3 is a schematic diagram showing one example of the screen image displayed by the display unit of the display device shown in Fig. 2. Fig. 3 shows an example in which the first period is set as a day, and the second period is set as a month.

As shown in Fig. 3, the first graph region 7 is arranged at a lower portion of the display unit 4. The second graph region 8 is arranged above the first graph region 7 of the display unit 4 so as to be in parallel with the first graph region 7. Moreover, this month's set target value (3,206 kWh in Embodiment 1) and an actual value (2,304 kWh in Embodiment 1) that is an accumulated value of the energy used amount used from the start time point of the second period until the present time point are displayed above the second graph region 8 of the display unit 4.

A first graph 18 is displayed in the first graph region 7. The first graph 18 is shown by a time coordinate axis 19 and a data coordinate axis 20. A maximum scale value of the time coordinate axis 19 is the second period (a month (30 days) in Embodiment 1), and the data coordinate axis 20 has a scale indicating the energy used amount. Specifically, the first graph 18 shows as the bar graph a first accumulated value 22 in each first period (a day in Embodiment 1). Moreover, a first target value 21 is displayed on the first graph region 7. The first target value 21 is calculated based on the set target value that is the target energy used amount in the second period.

A second graph 23 is displayed as a bar graph in the second graph region 8 so as to be in parallel with the time coordinate axis 19 of the first graph 18. Specifically, the second graph 23 is a band-shaped graph which extends or shortens in a horizontal direction.

Moreover, a base end of the second graph 23 is displayed in the second graph region 8 so as to coincide with a base end of the time coordinate axis 19 in a vertical direction. Meanwhile, a tip end of the second graph 23 is displayed so as to be positioned outside a tip end (position corresponding to the maximum scale value of the time coordinate axis 19) of the time coordinate axis 19. To be specific, the second graph 23 is displayed so as to be larger in length than the first graph 18 in a direction (herein, the horizontal direction) along the time coordinate axis 19. With this, even if the actual value that is the accumulated value of the energy used amount becomes larger than the set target value, it can be displayed in the second graph 23 (to be precise, in the second graph region 8).

Moreover, the set target value 24 is displayed in the second graph region 8 so as to coincide with the maximum scale value of the time coordinate axis 19 in the vertical direction (the set target value 24 is displayed at a position corresponding to the maximum scale value of the time coordinate axis 19).

Further, a current target value 25 that is the target value of the accumulated value of the energy used amount used from the start time point of the second period until the present time point is displayed at the second graph 23 in the second graph region 8 so as to coincide with the present time point of the time coordinate axis 19 in the vertical direction (the current target value 25 is displayed at a position of the second graph 23, the position corresponding to the present time point of the time coordinate axis 19).

## Method for Operating Display Device

Next, a method for operating the display device 51 of the water heater 100 according to Embodiment 1 will be explained in reference to Figs. 1 to 8. In the following explanation, since a method for operating the water heating device 52 by the display device 51 is not strongly related to the operations of the present invention, an explanation thereof is omitted.

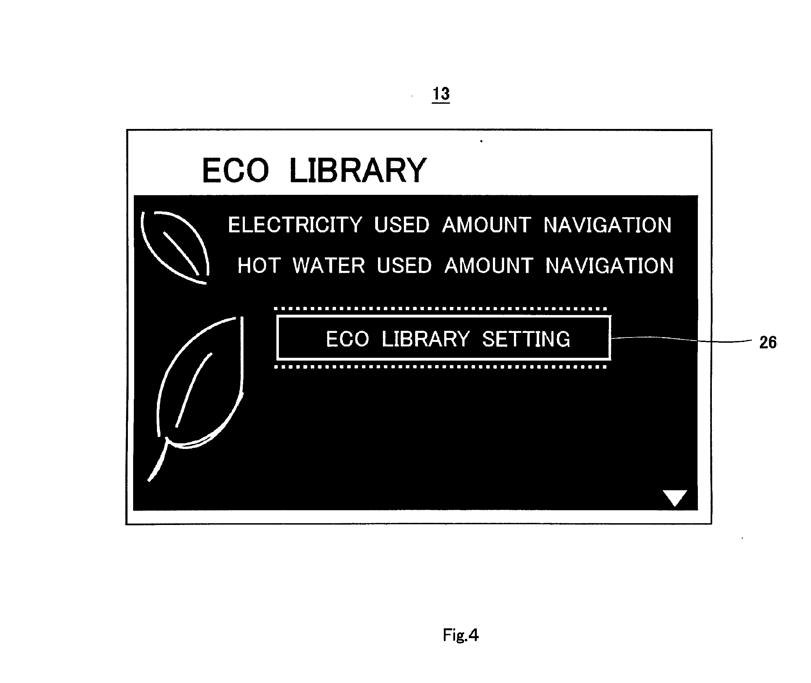

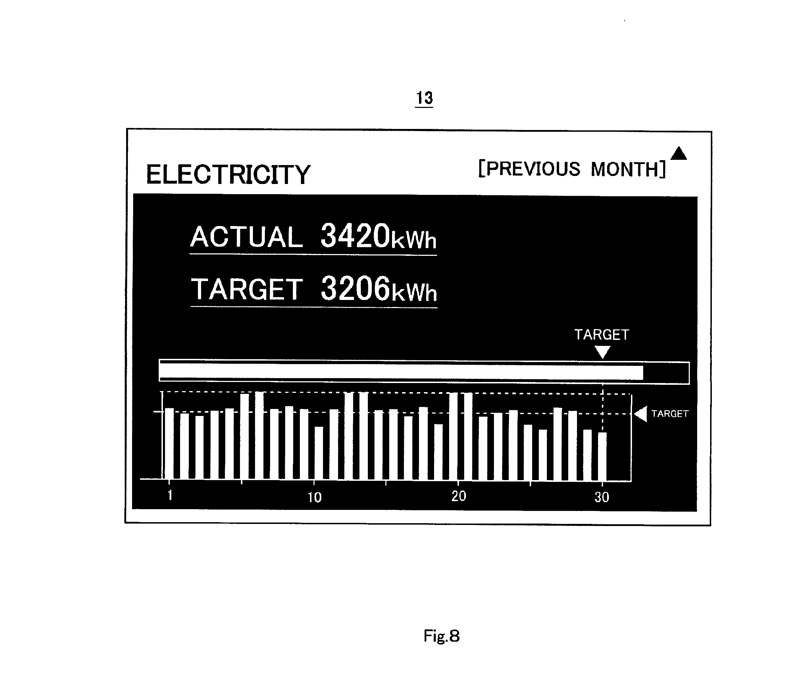

Figs. 4 to 8 are schematic diagrams each showing one example of the screen image displayed by the display unit of the display device shown in Fig. 2. In Fig. 8, reference signs, such as the first graph region 7, are omitted.

First, the user presses the eco library switch 10 of the display device 51 shown in Fig. 2. By this command, the controller 5 causes the display light 11 to light up and displays an eco library menu screen image shown in Fig. 4 on the display screen 13 of the display unit 4.

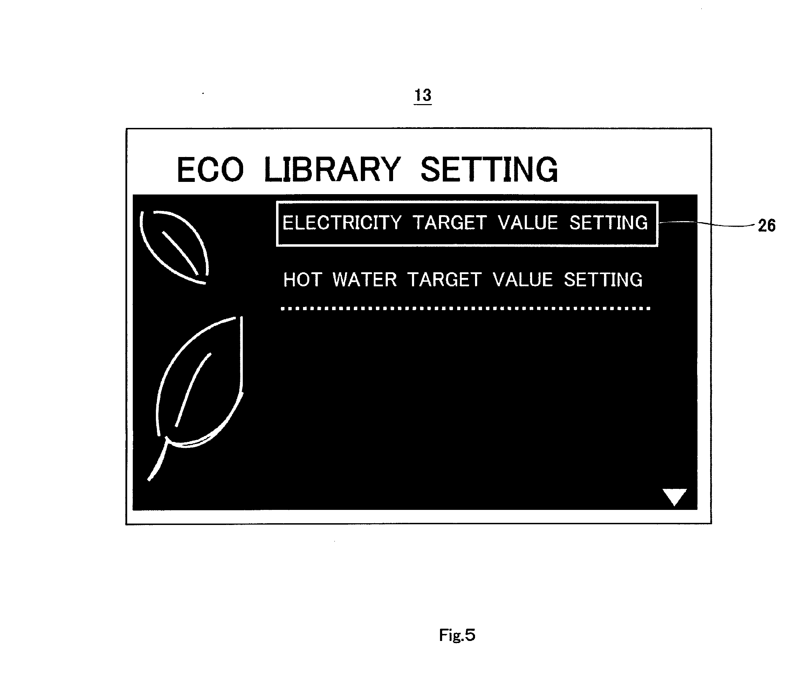

Next, the user operates the down arrow key 15 and the up arrow key 16 to move a cursor 26 of the eco library menu screen image shown in Fig. 4, selects the eco library setting, and presses the set key 17. By this command, the controller 5 displays an eco library setting screen image of Fig. 5 on the display screen 13 of the display unit 4.

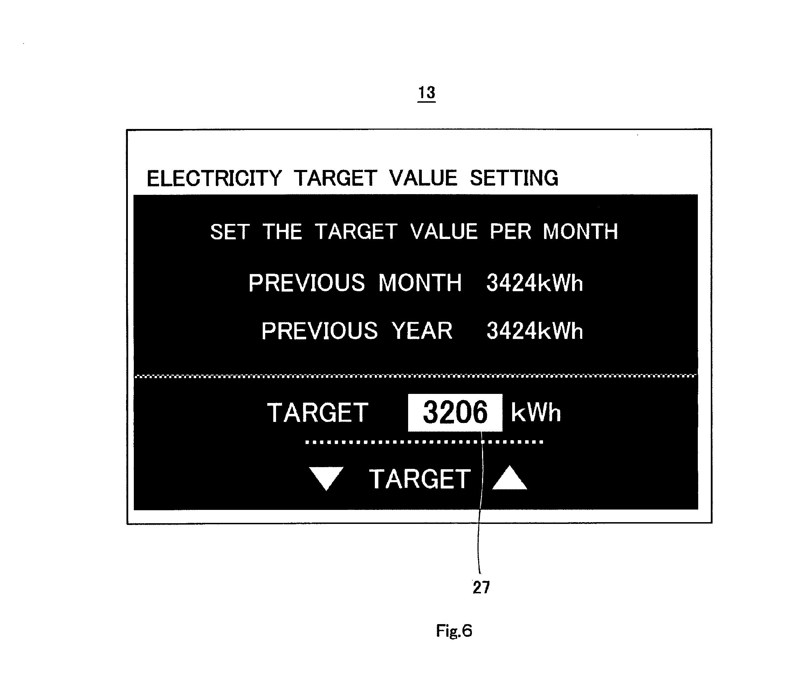

Next, the user operates the down arrow key 15 and the up arrow key 16 to move the cursor 26 of the eco library setting screen image shown in Fig. 5, selects an electricity target value setting, and presses the set key 17. By this command, the controller 5 displays an electricity target value setting screen image of Fig. 6 on the display screen 13 of the display unit 4. In Fig. 6, a screen image for setting the target value per month is displayed, and the actual value (accumulated value) of the electricity used amount in the previous month and the actual value (accumulated value) of the electricity used amount in the same month of the previous year are displayed, the actual values being stored in the storing unit 3.

Moreover, the controller 5 displays the set target value on the display screen 13. Specifically, as shown in Fig. 6, the controller 5 displays the set target value of the present time point in a white-black inverted setting area 27. As described above, the set target value is suitably set by the target setting unit 6. Moreover, when changing the set target value, the user operates the down arrow key 15 and the up arrow key 16 to increase or decrease the numerical value displayed in the setting area 27 and presses the set key 17. In contrast, when not changing the set target value, the user just presses the set key 17.

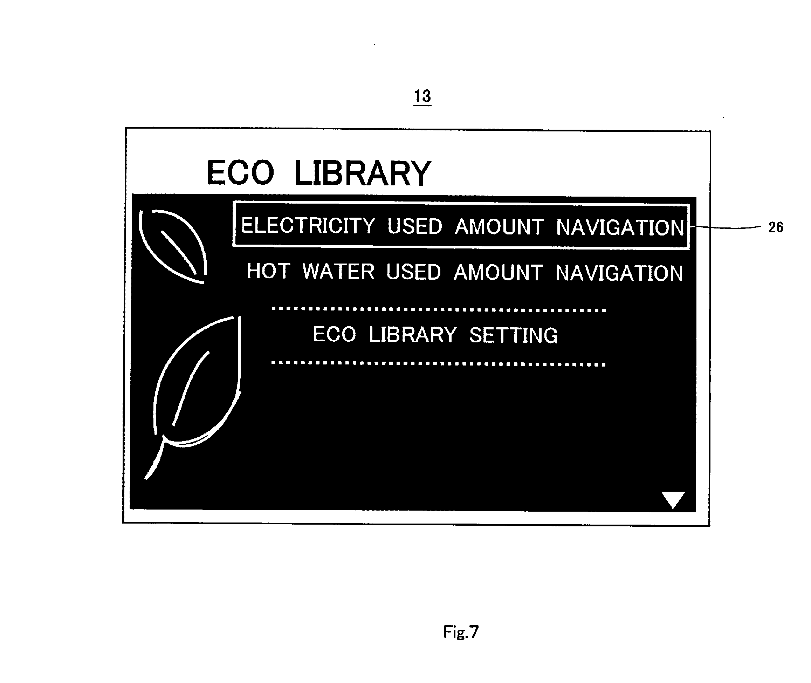

When the set target value is set (when the user presses the set key 17), the eco library menu screen image shown in Fig. 7 is displayed on the display screen 13 of the display unit 4. The user operates the down arrow key 15 and the up arrow key 16 to move the cursor 26 of the eco library menu screen image shown in Fig. 7, selects an electricity used amount navigation, and presses the set key 17. The display screen 13 of the display unit 4 shown in Fig. 4 is the same as the display screen 13 of the display unit 4 shown in Fig. 7 except that the position of the cursor 26 is different.

By this command, the controller 5 displays the screen image shown in Fig. 3. Specifically, the controller 5 displays as the set target value 24 the set target value set in Fig. 6 at a position corresponding to the maximum scale value of the time coordinate axis 19 of the second graph region 8.

Moreover, the controller 5 calculates the current target value by Formula 1 below based on the set target value set in Fig. 6 and displays the obtained current target value as the current target value 25 in the second graph region 8.

## Formula 1

$$AN = A2 \times T0/T2$$

AN: current target value
A2: set target value
T0: time elapsed since start time point of second period until present time point
T2: second period
Moreover, the controller 5 calculates the accumulated value of the electricity used amount (energy used amount) used from the start time point of the second period until the present time point by Formula 2 below and displays the obtained accumulated value as a bar graph value of the second graph 23 in the second graph region 8.

## Formula 2

$$D2 = R2 \times T2/A0$$

D2: bar graph value
R2: accumulated value of energy used amount used from start time point of second period until present time point
T2: second period
A0: set target value
Moreover, the controller 5 displays the first accumulated values, stored in the storing unit 3, as the first graph 18 in the first graph region 7 for each first period from the start time point of the second period until the present time point.

Further, the controller 5 calculates the first target value based on the set target value set in Fig. 6, the first target value being the target energy used amount in the first period. The controller 5 displays the obtained first target value as the first target value 21 and displays the obtained first target value as a line graph 28 in the first graph region 7 such that the line graph 28 overlaps the first graph 18. Here, in Embodiment 1, the first target value 21 is a value obtained by dividing the set target value (3,407 kWh) by the second period (30 days).

By pressing the down arrow key 15 when the screen image shown in Fig. 3 is displayed, the screen image (graph) of previous month's energy used amount (electricity used amount) is displayed (see Fig. 8). In this case, since the present time point has already passed the end time point of the second period, the current target value 25 is not displayed in the second graph region 8. Moreover, by pressing the up arrow key 16 when the screen image shown in Fig. 8 is displayed, the screen image (graph) of this month's energy used amount (electricity used amount) shown in Fig. 3 is displayed.

In accordance with the display device 51 of Embodiment 1 configured as above and the water heater 100 including the same, since the first graph 18 showing the electricity used amount in each first period and the second graph 23 showing the accumulated value of the electric energy used amount are shown in one screen, the user can obtain more information than the prior arts by one screen.

Moreover, for example, the accumulated value of the electric energy used amount may exceed the current target value 25 in the middle of the second period. Even in this case, since the first target value 21 and the line graph 28 are displayed in the first graph region 7, the user can recognize the target value of each first period without switching the display screen 13. Therefore, it is possible to raise user's awareness about energy saving as compared to the prior arts.

Moreover, since each of the current target value 25 and the set target value 24 is displayed so as to be associated with the time coordinate axis 19 of the first graph 18, it is easy for the user to understand the meaning of the information displayed on the display screen 13.

Therefore, as compared to the prior arts, the display device 51 of Embodiment 1 and the water heater 100 including the same can raise user's awareness about energy saving, can simplify the operation of switching the screen, and excel in convenience.

## Embodiment 2

In the display device according to Embodiment 2 of the present invention and the water heater including the same, the first period is a day, and the second period is a week. Since the display device 51 according to Embodiment 2 and the water heater 100 including the same are respectively the same in basic configuration as the display device 51 according to Embodiment 1 and the water heater 100 including the same, explanations of the configurations thereof are omitted.

## Configuration of Display Unit

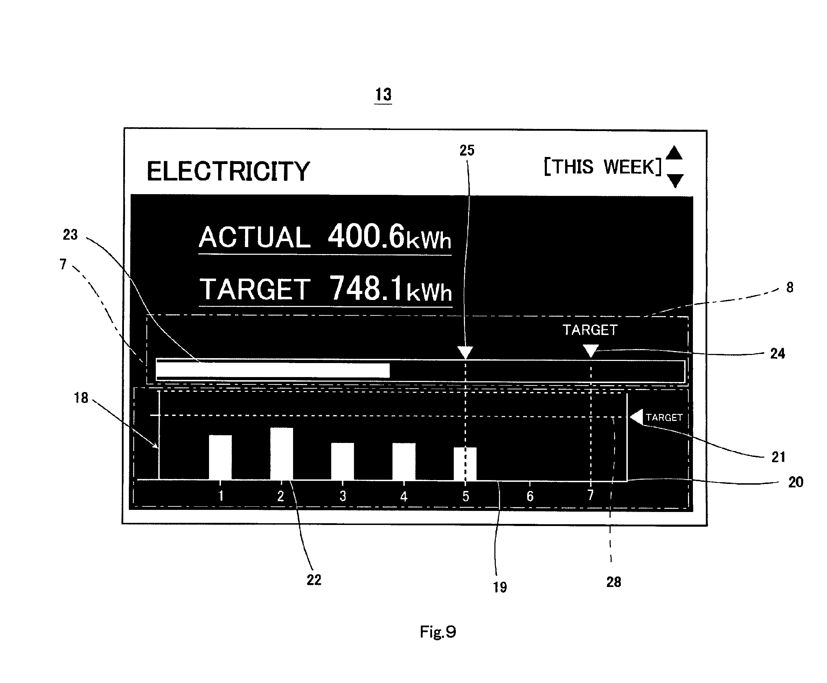

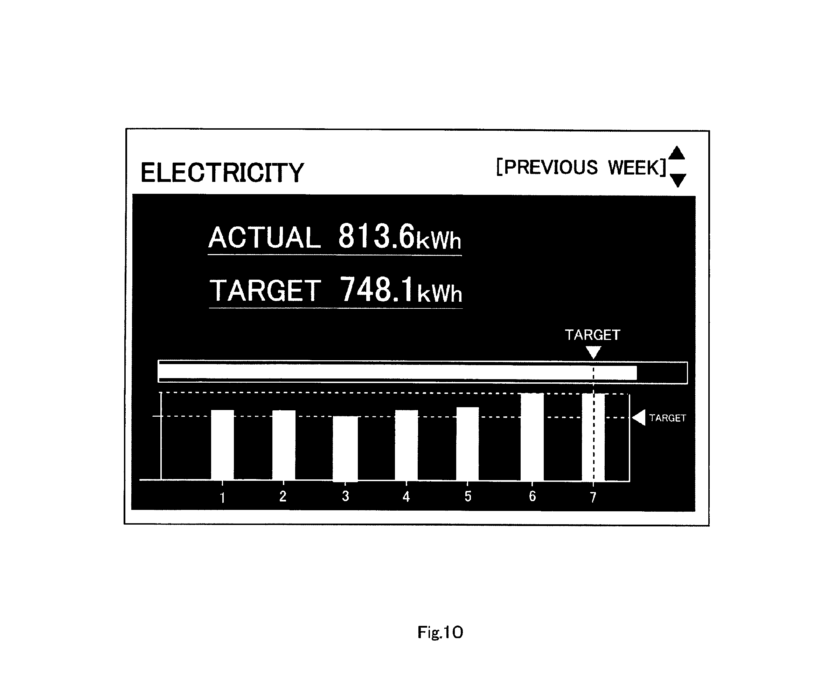

Figs. 9 and 10 are schematic diagrams each showing one example of the screen image displayed by the display unit of the display device according to Embodiment 2 of the present invention. In Fig. 10, the reference signs, such as the first graph region 7, are omitted.

The layout of the screen image displayed by the display unit 4 of the display device 51 of Modification Example 1 shown in Fig. 9 and the layout of the screen image displayed by the display unit 4 of the display device 51 according to Embodiment 1 are basically the same as each other but are different from each other in that the second period is a week. Therefore, the maximum scale value of the time coordinate axis 19 is displayed as 7 (days). Moreover, this week's set target value (748.1 kWh in Modification Example 1) set by the target setting unit 6 and the actual value (400.6 kWh in Modification Example 1) that is the accumulated value of the energy used amount used from the start time point of the second period until the present time point are displayed above the second graph region 8 of the display unit 4.

By pressing the down arrow key 15 when the screen image shown in Fig. 9 is displayed, the screen image (graph) of last week's energy used amount (electricity used amount) is displayed (see Fig. 10). In this case, since the present time point has already passed the end time point of the second period, the current target value 25 is not displayed in the second graph region 8. Moreover, by pressing the up arrow key 16 when the screen image shown in Fig. 10 is displayed, the screen image (graph) of this week's energy used amount (electricity used amount) shown in Fig. 9 is displayed.

The display device 51 according to Embodiment 2 configured as above and the water heater 100 including the same have the same operational advantages as the display device 51 according to Embodiment 1 and the water heater 100 including the same.

## Modification Example 1

Next, Modification Example of the display device 51 according to Embodiment 2 and the water heater 100 including the same will be explained.

The lifestyles of the users of the display device 51 and the water heater 100 including the same vary. For example, a case where the electricity used amount in the weekend is smaller than the electricity used amount in the weekday can be assumed, and vice versa. Moreover, the electricity used amount is assumed to change depending on seasons. Therefore, in the display device 51 of Modification Example 1 and the water heater 100 including the same, the controller 5 is configured such that the current target value can be changed depending on the lifestyle of the user.

In the display device of Modification Example 1 and the water heater including the same, the controller is configured to change the current target value depending on the time elapsed since the start time point of the second period. Since the display device 51 of Modification Example 1 and the water heater 100 including the same are respectively the same in basic configuration as the display device 51 according to Embodiment 2 and the water heater 100 including the same, explanations of the configurations thereof are omitted.

**Configuration of Display Unit**

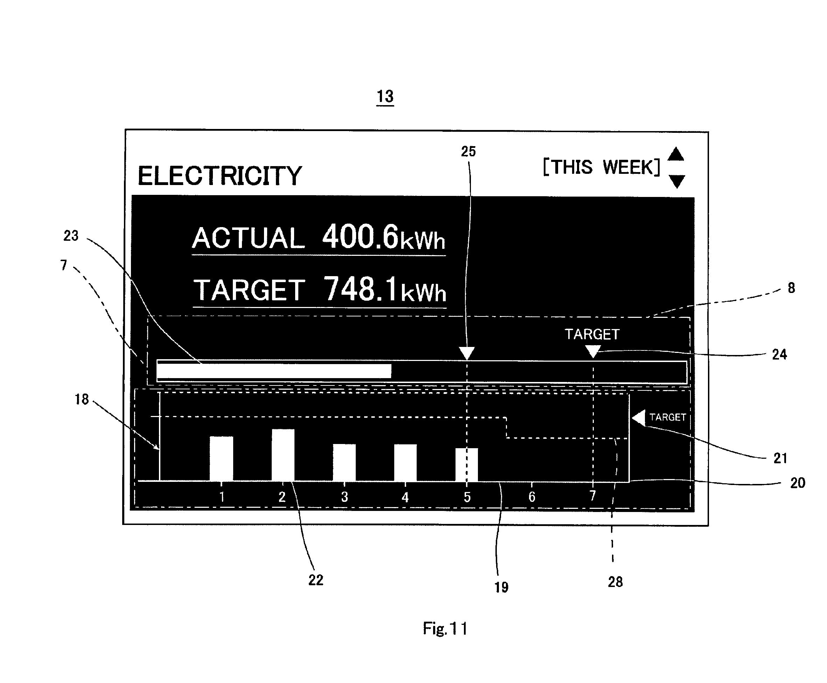

Fig. 11 is a schematic diagram showing one example of the screen image displayed by the display unit of the display device of Modification Example 1.

The layout of the screen image displayed by the display unit 4 of the display device 51 of Modification Example 1 shown in Fig. 11 and the layout of the screen image displayed by the display unit 4 of the display device 51 according to Embodiment 2 are basically the same as each other but different from each other in that the first target value 21 is changed depending on the time elapsed since the start time point of the second period and is then displayed.

To be specific, the controller 5 is configured to change the first target value 21 depending on the time elapsed since the start time point of the second period. Then, since the first target value 21 is changed depending on the time elapsed since the start time point of the second period, the controller 5 is configured to change the current target value 25 depending on the time elapsed since the start time point of the second period.

Specifically, the controller 5 selects one of various patterns of the first target values 21 in respective first periods, the first target values 21 being stored in the storing unit 3. The controller sets the first target values 21 based on the selected pattern. More specifically, in Modification Example 1, the controller 5 selects a pattern in which the first target values 21 of the first to fifth days are set to be high and the first target values 21 of the sixth and seventh days are set to be low. Then, the controller 5 sets the first target values 21 of the first to seventh days based on the above pattern and the set target value set by the target setting unit 6.

Moreover, the controller 5 sets the current target value 25 based on the setting of the first target values 21. Then, the controller 5 displays the first target values 21 and the current target value 25 on the display screen 13 of the display unit 4.

Thus, since the first target values 21 and the current target value 25 are displayed on the display screen 13 of the display unit 4, the bar graph value of the second graph 23 is suitably calculated by the controller 5 so as to be proportional to the set value of the first target value 21 in each first period. Then, the controller 5 displays the second graph 23 on the display screen 13 of the display unit 4 based on the obtained bar graph value.

In Modification Example 1, the controller 5 is configured to select one of various patters of the first target values 21 stored in the storing unit 3 and set the first target values 21. However, Modification Example 1 is not limited to this. For example, the user may produce the pattern of the first target values 21 by operating the touch panel group 12, and the controller 5 may set the first target values 21 based on the produced pattern.

The display device 51 and water heater 100 according to Modification Example 1 configured as above can obtain the same operational advantages as the display device 51 and water heater 100 according to Embodiment 2. Moreover, in accordance with the display device 51 and water heater 100 of Modification Example 1, the first target value 21 and the current target value 25 can be set so as to further correspond to the lifestyle of the user. Therefore, it is possible to further raise user's awareness about energy saving.

**Embodiment 3**

The display device and water heater according to Embodiment 3 of the present invention includes the target setting unit configured such that the timer unit measures a third period that is longer than the second period, and the display device sets the set target value that is the target energy used amount in the third period Moreover, the controller calculates a second target value from the set target value set by the target setting unit, the second target value being the target energy used amount in the second period. Further, the controller calculates the accumulated value of the energy used amount used from a start time point of the third period until the present time point by Formula 3, displays the obtained accumulated value as the bar graph value of the second graph, and calculates the current target value by Formula 4.

**Formula 3**

$$D4 = R4 \times T3/A3$$

D4: bar graph value
R4: accumulated value of energy used amount used from start time point of second period until present time point
T3: third period
A3: set target value

**Formula 4**

$$AN = A2 \times T0/T2$$

AN: current target value
A2: second target value

T0: time elapsed since start time point of second period until present time point
T2: second period

**Configuration of Water Heater**

The display device 51 according to Embodiment 3 of the present invention and the water heater 100 including the same and the display device 51 according to Embodiment 1 and the water heater 100 including the same are the same in basic configuration as each other but are different from each other in that the timer unit 1 and the target setting unit 6 are configured as below. The timer unit 1 is configured to measure the third period that is longer than the second period. Specifically, the first period is an hour, the second period is a day, and the third period is a month.

Moreover, the target setting unit 6 is configured to set the set target value as the target energy used amount in the third period. The controller 5 is configured to calculate the second target value from the set target value in the third period, the second target value being the target energy used amount in the second period, the set target value being set by the target setting unit 6. Then, the controller 5 is configured to calculate the bar graph value and the current target value based on the obtained second target value by Formulas 3 and 4.

Since the configuration of the appearance of the display device 51 according to Embodiment 3 is the same as that of the display device 51 according to Embodiment 1, an explanation thereof is omitted.

**Configuration of Display Unit**

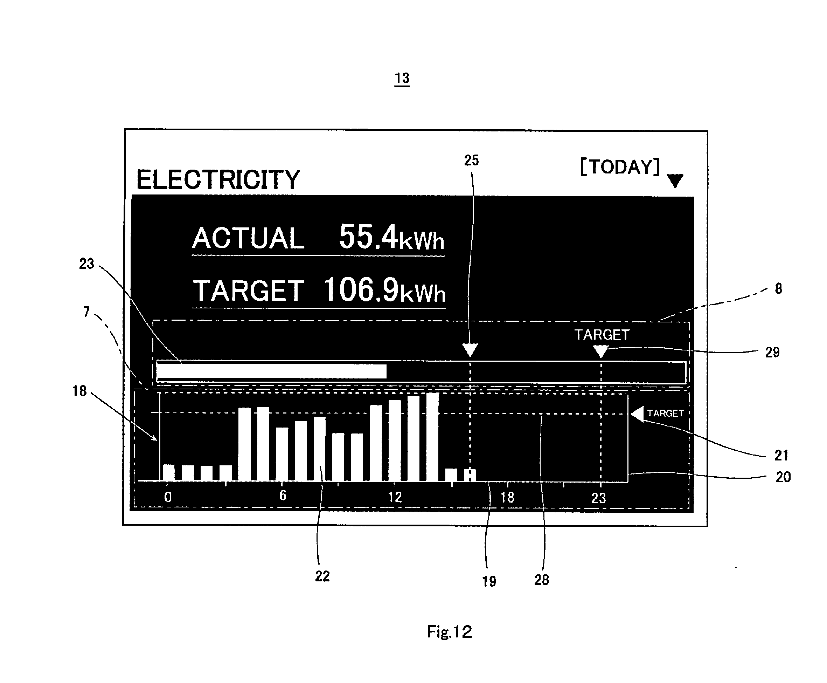

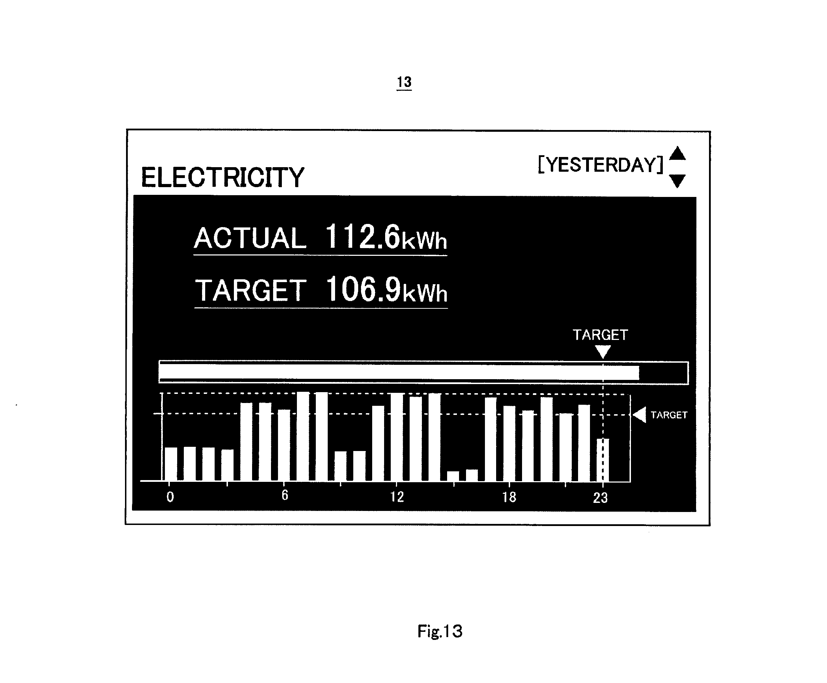

Figs. 12 and 13 are schematic diagrams each showing one example of the screen image displayed by the display unit of the display device according to Embodiment 3 of the present invention.

The layout of the screen image displayed by the display unit 4 of the display device 51 according to Embodiment 3 shown in Fig. 12 and the layout of the screen image displayed by the display unit 4 of the display device 51 according to Embodiment 1 are basically the same as each other but are different from each other in that the second period is a day Therefore, the maximum scale value of the time coordinate axis 19 is displayed as 23 (o'clock). The maximum scale value of the time coordinate axis 19 is 23 because the minimum scale value of the time coordinate axis 19 is 0 (o'clock).

Moreover, today's second target value (106.9 kWh in Embodiment 3) set by the target setting unit 6 and the actual value (55.4 kWh in Embodiment 3) that is the accumulated value of the energy used amount used from the start time point of the second period until the present time point are displayed above the second graph region 8 of the display unit 4.

Here, a method for calculating the second target value will be explained.

First, the target setting unit 6 sets the set target value. As with Embodiment 1, the set target value is suitably set in Embodiment 3. In Embodiment 3, the set target value is set as 3,206 kWh as with Embodiment 1.

Then, the controller 5 sets the second target value based on the set target value (3,206 kWh) set by the target setting unit 6. Specifically, the second target value is 106.9 kWh obtained by dividing 3,206 kWh by 30 days.

Moreover, as shown in Fig. 12, the second target value 29 is displayed in the second graph region 8 on the display screen 13 of the display unit 4. A value calculated by the controller 5 based on the second target value is displayed as the first target value 21 displayed in the first graph region 7.

By pressing the down arrow key 15 when the screen image shown in Fig. 12 is displayed, the screen image (graph) of yesterday's energy used amount (electricity used amount) is displayed (see Fig. 13). In this case, since the present time point has already passed the end time point of the second period, the current target value 25 is not displayed on the second graph region 8. Moreover, by pressing the up arrow key 16 when the screen image shown in Fig. 13 is displayed, the screen image (graph) of today's energy used amount (electricity used amount) shown in Fig. 12 is displayed.

The display device 51 according to Embodiment 3 configured as above and the water heater 100 including the same can obtain the same operational advantages as the display device 51 according to Embodiment 1 and the water heater 100 including the same.

Embodiments 1 to 3 (including Modification Example 1) have been explained by using the electricity used amount as the energy used amount. However, since each of the case of using the hot water used amount and the case of using the gas used amount is basically the same as the case of using the electricity used amount although the unit changes from the electricity amount to the water amount or the gas amount, an explanation thereof is omitted.

Needless to say, in the display device of the present invention and the water heater including the same, the user can operate the touch panel group 12 to switch the screen to various screens described in Embodiments 1 to 3 (including Modification Example 1).

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the spirit of the present invention. Moreover, various inventions can be made by suitable combinations of the plurality of components disclosed in the above embodiments.

**[Industrial Applicability]**

As compared to the prior arts, each of the display device of the present invention and the water heater including the same can further raise user's awareness about energy saving and simplify the operation of switching the screen, and excels in convenience. Therefore, the display device of the present invention and the water heater including the same are useful.

**[Reference Signs List]**

1    timer unit

2    measuring unit

3    storing unit

4    display unit

5    controller

6    target setting unit

7    first graph region

8    second graph region

9    direct switch group

10    eco library switch

11    display light

12    touch panel group

13    display screen

14    menu key

15    down arrow key

16    up arrow key

17    set key

18    first graph

19    time coordinate axis

20    data coordinate axis

21    first target value

22    first accumulated value

23    second graph

24    set target value

25    current target value

26    cursor

27    setting area

28    line graph

29    second target value

51    display device

52    water heating device

100    water heater

**Claims**

1.    A display device configured to display an energy used amount as a graph, comprising:

a timer unit including a clock and a calendar function and configured to measure each of first periods and a second period that is longer than the first period;
a measuring unit configured to measure the energy used amount used by a user;
a storing unit configured to store the energy used amount measured by the measuring unit;
a display unit including a first graph region and a second graph region arranged in parallel with the first graph region; and
a controller, wherein:
a first graph is displayed in the first graph region of the display unit, the first graph being shown by a time coordinate axis whose maximum scale value is the second period and a data coordinate axis having a scale indicating the energy used amount;
a second graph is displayed as a bar graph in the second graph region of the display unit so as to be in parallel with the time coordinate axis of the first graph;
the controller calculates first accumulated values, each of which is the energy used amount in each of the first periods;
the controller displays the first accumulated values as the first graph for each of the first periods from a start time point of the second period until a present time point defined by the timer unit;
the controller displays as a bar graph value of the second graph an accumulated value of the energy used amount used from the start time point of the second period until the present time point defined by the timer unit; and
the controller displays a current target value at a position of the second graph, the position corresponding to the present time point of the time coordinate axis of the first graph, the current target value being a target value of the accumulated value of the energy used amount used from the start time point of the second period until the present time point defined by the timer unit.

2. The display device according to claim 1, further comprising a target setting unit configured to set a set target value that is a target energy used amount in the second period, wherein
the controller displays the set target value, set by the target setting unit, at a position of the second graph, the position corresponding to the maximum scale value of the time coordinate axis of the first graph.

3. The display device according to claim 2, wherein the controller calculates the set target value for each of the first periods and calculates the current target value based on the obtained set target value.

4. The display device according to claim 2 or 3, wherein the controller is configured to change the current target value depending on a time elapsed since the start time point of the second period.

5. The display device according to claim 1, wherein:

the controller calculates the accumulated value of the energy used amount used from the start time point of the second period until the present time point by Formula 1 and displays the obtained accumulated value as a bar graph value of the second graph; and
the controller calculates the current target value by Formula 2.
Formula 1

$$D2 = R2 \times T2/A0$$

D2: bar graph value
R2: accumulated value of energy used amount used from start time point of second period until present time point
T2: second period
A0: set target value
Formula 2

$$AN = A2 \times T0/T2$$

AN: current target value
A2: set target value

T0: time elapsed since start time point of second period until present time point T2: second period

6. The display device according to claim 1, wherein:
the timer unit measures a third period that is longer than the second period;
the display device includes a target setting unit configured to set a set target value that is a target energy used amount in the third period;
the controller calculates a second target value from the set target value set by the target setting unit, the second target value being the target energy used amount in the second period;
the controller calculates an accumulated value of the energy used amount used from a start time point of the third period until the present time point by Formula 3 and displays the obtained accumulated value as a bar graph value of the second graph; and
the controller calculates the current target value by Formula 4.
Formula 3

$$D4 = R4 \times T3/A3$$

D4: bar graph value
R4: accumulated value of energy used amount used from start time point of second period until present time point
T3: third period
A3: set target value
Formula 4

$$AN = A2 \times T0/T2$$

AN: current target value
A2: second target value
T0: time elapsed since start time point of second period until present time point
T2: second period

7. The display device according to any one of claims 1 to 5, wherein the second period is an integer multiple of the first period, the multiple being not one.

8. The display device according to claim 6, wherein the third period is an integer multiple of the second period, the multiple being not one.

9. The display device according to any one of claims 1 to 5, wherein the controller calculates a first target value based on the set target value, the first target value being the target energy used amount in the first period, and displays the obtained first target value as a line graph such that the line graph overlaps the first graph.

**10.** The display device according to claim 6, wherein the controller calculates a first target value based on the second target value, the first target value being the target energy used amount in the first period, and displays the obtained first target value as a line graph such that the line graph overlaps the first graph.

**11.** The display device according to claim 9 or 10, wherein the controller is configured to change the first target value depending on a time elapsed since the start time point of the second period.

**12.** The display device according to claim 9, wherein the first target value is a value obtained by dividing the set target value by the second period.

**13.** The display device according to claim 10, wherein the first target value is a value obtained by dividing the set target value by the third period.

**14.** The display device according to any one of claims 1 to 13, wherein the second graph is set to be larger in length than the first graph in a direction along the time coordinate axis.

**15.** The display device according to any one of claims 1 to 14, wherein the first period is a day, and the second period is a month.

**16.** The display device according to any one of claims 1 to 14, wherein the first period is a day, and the second period is a week.

**17.** The display device according to any one of claims 6, 8, 10, 11, 13, and 14, wherein the first period is an hour, the second period is a day, and the third period is a month.

**18.** A water heater comprising:

the display device according to any one of claims 1 to 17; and
a water heating device configured to heat water by using energy to supply hot water.

100

WATER HEATING DEVICE — 52

MEASURING UNIT — 2

STORING UNIT — 3

CONTROLLER

TARGET SETTING UNIT — 5, 6

TIMER UNIT — 1

51

DISPLAY UNIT

SECOND GRAPH REGION — 8

FIRST GRAPH REGION — 7

4

DISPLAY DEVICE

Fig.1

Fig.2

Fig.3

Fig.4

EP 2 362 188 A2

**13**

ECO LIBRARY SETTING

ELECTRICITY TARGET VALUE SETTING —— 26

HOT WATER TARGET VALUE SETTING

EP 2 362 188 A2

Fig.5

ELECTRICITY TARGET VALUE SETTING

SET THE TARGET VALUE PER MONTH

PREVIOUS MONTH 3424kWh

PREVIOUS YEAR 3424kWh

TARGET    3206 kWh

▼ TARGET ▲

27

Fig.6

# ECO LIBRARY

ELECTRICITY USED AMOUNT NAVIGATION ⎯ 26

HOT WATER USED AMOUNT NAVIGATION

ECO LIBRARY SETTING

▼

Fig.7

EP 2 362 188 A2

ELECTRICITY                    [PREVIOUS MONTH] ▲

ACTUAL  3420kWh

TARGET  3206kWh

TARGET
▼

TARGET

1          10          20          30

Fig.8

Fig.9

EP 2 362 188 A2

Fig.10

Fig.11

EP 2 362 188 A2

13

Fig.12

**ELECTRICITY** [YESTERDAY]

ACTUAL 112.6kWh

TARGET 106.9kWh

TARGET

TARGET

0    6    12    18    23

Fig.13

Fig.14

EP 2 362 188 A2

Fig.15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003050626 A

- JP 2006013780 A